# EUROPEAN PATENT APPLICATION

(11) **EP 2 017 767 A1**
(43) Date of publication of application: **21.01.2009**
(21) Application number: 07829470.9
(22) Date of filing: 10.10.2007
(51) Int. Cl.: G06F 21/24, G06F 21/00, H04M 11/00, H04Q 7/38

(54) **FILE MANAGEMENT SYSTEM AND METHOD, AND MOBILE TERMINAL**

(30) Priority: 10.04.2007 JP 2007103230
(71) Applicant: HITACHI SOFTWARE ENGINEERING CO., LTD., Shinagawa-ku 140-0002 Tokyo (JP)
(72) Inventor: KIRIHATA, Yasuhiro, Tokyo 140-0002 (JP); OHAMA, Nobuyuki, Tokyo 140-0002 (JP)
(74) Representative: Liesegang, Eva
(86) International application number: PCT/JP2007/069732
(87) International publication number: WO 2008/129701

(57) **Abstract**

In a system to realize prevention of leakage and loss of confidential information by inhibiting writing into a secondary storage device or writing into external storage media, created confidential data is archived by a secure method without being lost if communication is not available and a file server cannot save the information. For this purpose, first, a designated folder is created on a non-volatile storing memory being built in a mobile terminal and created confidential data is saved in the folder. Then, a filter driver controls access to the designated folder to prevent leakage of information by an application in a mobile phone by a malicious user. Further, a function to remove data in the designated folder in the mobile terminal from a mobile terminal management server through a telephone network prevents loss of saved confidential data due to loss of the mobile terminal.

## Description

### Technical Field

The present invention relates to a system and a method of managing files and a mobile terminal device; for example, the present invention relates to a method of securely archiving data if a created confidential file cannot be saved in a file server in an environment where a user terminal device cannot use a communication function.

### Background Art

Conventionally, bringing out of confidential data is constrained by encrypting a confidential file when the file is saved in a secondary storage device of a user terminal. In this scheme, even if a file is brought out, information itself is not brought out since the file has been encrypted. For example, according to patent document 1, file I/O processing by the OS is interrupted and encryption/decryption processing is automatically performed so that an automatic file encryption system is realized that is convenient for a user. Further, control of access to external storage media or a printer enables to edit a confidential file and prevent leakage of information.
Patent Document 1: JP Patent Publication (Kokai) No. 11-149414 A (1999)

### Disclosure of the Invention

### Problems to be Solved by the Invention

However, for example, assume that a mobile PC is lost in which confidential data is saved such as customer information being encrypted. It is socially unacceptable in the recent tendency only that the confidential information will not be leaked because of the encryption. If private information is lost in an encrypted file as disclosed in the patent document 1, it is required to apologize to customers and must report or publicize the fact to supervisory authorities. In this way, the loss of confidential information is a serious problem.

In view of the above circumstances, the present invention provides an approach to secure archiving of confidential data without losing it.

### Means for Solving the Problems

To solve the above problem, according to the present invention, when confidential data is stored in a mobile terminal device (for example, a mobile phone) from a user terminal device (for example, a PC), authentication is performed between the user terminal device and the mobile terminal device to decide whether or not the devices are valid apparatuses. Then, a memory access control driver acquires an input/output request for a non-volatile memory in the mobile terminal device by any application (including a file managing process to store the confidential data in a memory) in the mobile terminal device, limits access from processes other than a file managing process on a designated folder in the non-volatile memory, and allows only the file managing process to access the confidential data. This can protect data saved in the designated folder in the non-volatile memory.

That is, a file management system according to the present invention comprises a user terminal device and a mobile terminal device and transfers confidential files between the devices. The user terminal device includes file transfer controlling means for requesting access to the mobile terminal device and executing transfer of the confidential files. The mobile terminal device includes: file management means for executing authentication of the user terminal device in response to the access request by the file transfer controlling means, and requesting access to a memory (for example, a non-volatile memory) to store the confidential files transferred from the file transfer controlling means in the memory if the authentication is successful; and memory access controlling means (a memory access control driver) for, in response to the request for access to the memory, permitting the confidential files to be stored in the memory only if an accessing party is the file management means.

The file management system further includes remote removal controlling means being connected to the mobile terminal device and for requesting to remove confidential files stored in the memory of the mobile terminal device. In response to a file removal request by the remote removal controlling means, the file management means in the mobile terminal device removes the confidential files stored in the memory. When the removal operation is completed, the remote removal controlling means is notified of the completion.

The file transfer controlling means in the user terminal device issues a transfer request to the file management means of the mobile terminal device to transfer the confidential files stored in the memory of the mobile terminal device to the user terminal device. In response to the transfer request, the file management means obtains the confidential files from the memory and transmits them to the file transfer controlling means.

The present invention also provides a mobile terminal device used in the file management system. The mobile terminal device is to transmit/receive confidential files to/from a user terminal device and is characterized by comprising: file management means for executing authentication of the user terminal device in response to an access request by the user terminal device, and requesting access to a memory to store the confidential files transferred from the user terminal device in the memory if the authentication is successful; and memory access controlling means for, in response to the request for access to the memory, permitting the confidential files to be stored in the memory only if an accessing party is the file management means.

Further characteristics of the present invention will be apparent from the best mode for carrying out the present invention and the attached drawings.

### Advantages of the Invention

According to the present invention, created confidential data can be securely archived without losing it in an environment where a communication function of a user terminal device is not available and a file server is not accessible.

### Brief Description of the Drawings

Figure 1 is a drawing showing the overall configuration of a file management system according to a first embodiment of the present invention.
Figure 2 is a flowchart illustrating processing to copy confidential data from a user terminal to a mobile phone.
Figure 3 is a flowchart illustrating processing to remotely remove confidential data in a mobile phone from a mobile terminal management server.
Figure 4 is a drawing representing a management page screen of the mobile terminal management server.
Figure 5 is a flowchart illustrating processing to control access to confidential data from an application in a mobile phone.
Figure 6 is a drawing showing the overall configuration of a file management system according to a second embodiment of the present invention.
Figure 7 is a flowchart illustrating processing to access confidential data in a mobile phone from a user terminal.

### Description of Symbols

- 100: file server
- 101: user terminal
- 102: mobile phone
- 103: mobile terminal management server
- 104: Internet
- 105: USB cable
- 106: telephone network
- 107: OS
- 108: application
- 109: file transfer client
- 110: external media writing control driver
- 111: secondary storage device writing control driver
- 113: file management service
- 114: memory access control driver
- 115: confidential data
- 116: storing memory
- 117: management page
- 118: Web server
- 119: remote removal service
- 120: secondary storage device
- 121: memory (cache memory)

### Best Mode for Carrying Out the Invention

The following will describe embodiments of the present invention with reference to the attached drawings. However, it is to be noted that the embodiments are just examples to realize the present invention and do not limit the present invention.

As described previously, an accident to lose confidential information causes a serious problem. Therefore, there is a great need for permitting users to use and view confidential information but not to save the information in a PC that might be lost such as a mobile PC. However, such an automatic file encryption system as disclosed in the patent document 1 cannot answer the need.

To answer the need, the assignee invented and applied a patent for a system that aims prevention of leakage and loss of confidential data and file server aggregation by implementing software functions of not allowing a user terminal to save any data and inhibiting copy or print of data to external storage media and archiving new created confidential data in a file server on a network (JP Patent Application No. 2006-238574).

However, the system has a serious problem in that it cannot access the file server on the network or use confidential data in an environment where communication is not available such as in the outside of an office.

A system according to this embodiment can securely archive created confidential data without losing the data even in an environment where communication is not available and a file server is not accessible.

### <First Embodiment>

### (1) Configuration of Data Management System

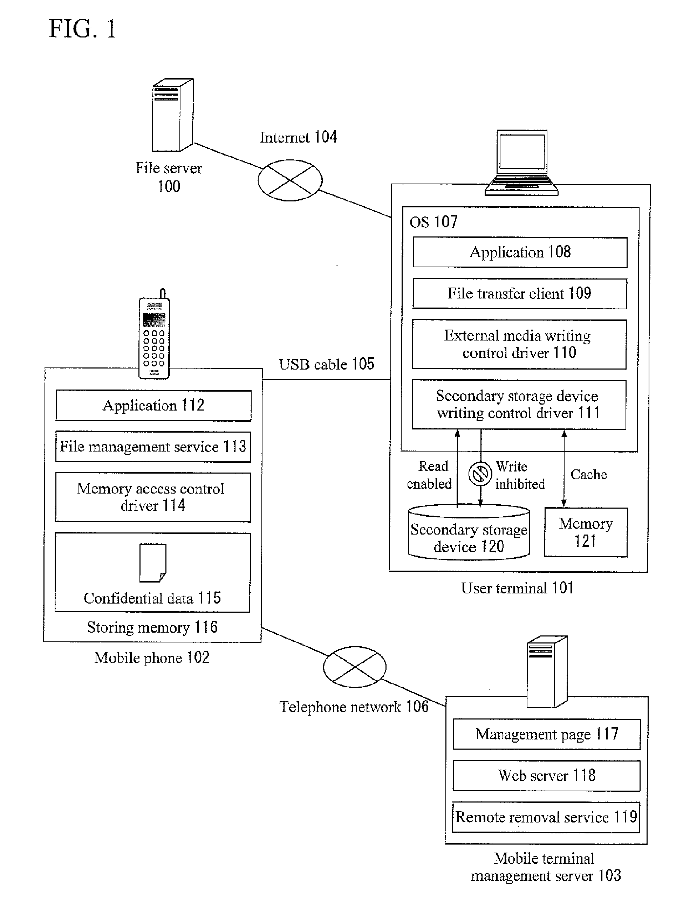

Figure 1 is a drawing showing the overall configuration of a data management system according to a first embodiment of the present invention. As shown in Fig. 1, the data management system consists of a file server 100, a user terminal 101, a mobile phone (which is not limited to a mobile phone, but can be a mobile terminal such as a PDA having a communication function) 102 and a mobile terminal management server 103. The file server 100 and the user terminal 101 1 can communicate with each other via the Internet 104, while the mobile phone 102 and the mobile terminal management server 103 can communicate with each other via a wireless telephone network 106.

In an environment where the Internet 104 is available, confidential data in the user terminal 101 is managed through communication with the file server 100. In an environment where the Internet 104 is unavailable, the confidential data can be managed using the mobile phone 102. To manage the confidential data using a mobile phone, the user terminal 101 and the mobile phone 102 are connected to each other via a USB cable for serial communication between them.

The user terminal 101 comprises a secondary storage device 120, a cache memory 121, an application operation unit 108 that operates on an OS 107 according to control by a processing control unit such as a CPU or an MPU (not shown), a file transfer client 109, an external media writing control driver 110 and a secondary storage device writing control driver 111.

The application operation unit 108 starts up various applications to operate. The external media writing control driver 110 inhibits writing into external storage media such as a USB memory or an external hard disk and outputting to a printer. The secondary storage device writing control driver 111 monitors an I/O request to the secondary storage device 120 by the OS: it permits reading data from the secondary storage device 120 but inhibits writing data in the device 120. Specifically, it caches data to be written in the memory 121 at the writing; and at the reading, it overwrites a part overlapping with read out data of data that has been already cached in the memory 121 in data read out from the secondary storage device 120 and transfers the result to the OS. This allows for pseudo (apparent) writing in the secondary storage device 120, but actually, written data is not reflected in the secondary storage device 120 at all, but deleted at the power OFF. With the two drivers, confidential data created in the user terminal 101 cannot be outputted to the outside or saved in the secondary storage device 120 at all. In other words, confidential data cannot be brought out from the user terminal 101: if a terminal is lost, confidential data is not lost because confidential data has not been saved in the terminal. However, it is inconvenient that created data cannot be saved. Therefore, confidential data created in the user terminal 101 can be normally saved in the file server 100 through the Internet 104. This is described in the prior JP Patent Application No. 2006-23 8574.

Assume that communication is not available in the outside of an office: then, a problem occurs in that the file server 100 is not accessible so that created data cannot be saved. To solve the problem, a storing memory 116 being built in the mobile phone 102 can save data through a USB cable 105.

To realize the operation, the mobile phone 102 comprises the storing memory (for example, a non-volatile memory) 116 for storing confidential data 115 and the like, an application operation unit 112 that operates on the OS of the mobile phone according to control by a processing control unit such as a CPU or an MPU (not shown) of the mobile phone, a file management service 113 and a memory access control driver 114.

The user terminal 101 and the mobile phone 102 are connected to each other via the USB cable 105. If a user directs the user terminal 101 to save confidential data in the mobile phone 102, the file transfer client 109 in the user terminal 101 accesses the file management service 113 in the mobile phone 102 through the USB cable 105 to transfer confidential data. During this, the memory access control driver 114 monitors I/O of the storing memory 116 and inhibits processes other than the file management service 113 from accessing the confidential data 115. That is, only the file management service 113 can handle the confidential data 115. This can inhibit a malicious user from accessing confidential data by using an application 112 such as a Web browser or a mailer in the mobile phone 102 and leaking the data to the outside of the mobile phone. If the mobile phone 102 is lost with the confidential data 115 being saved, a system administrator can access the lost mobile phone 102 through the telephone network 106 by using a remote removal service 119 of the mobile terminal management server 103 and issue a delete instruction to the file management service 113 to remove the confidential data 115 in the mobile phone 102 (details of the removal operation will be described later). This function can prevent saved confidential data from being lost if the mobile phone is lost. After the deletion is completed, the file management service 113 sends notification of file removal completion and a list of deleted files to the remote removal service of the mobile terminal management server 103. In this way, the administrator can surely know that files have been deleted. The administrator can operate a remote removal service on a management page 117 and view a list of removed files after remote removal.

### (2) Processing to Copy Confidential Data

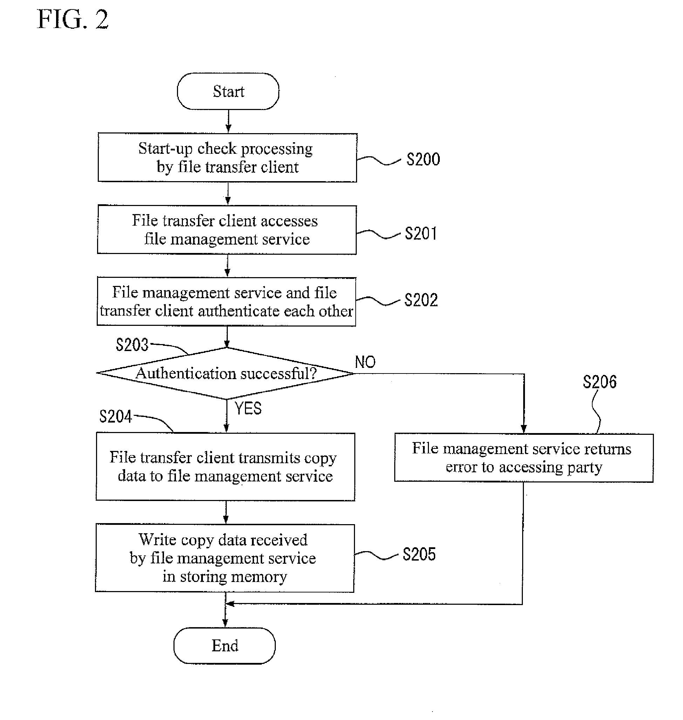

Figure 2 is a flowchart illustrating processing to copy the confidential data 115 from the user terminal 101 to the mobile phone 102.

First of all, when the file transfer client 109 starts up, it performs start-up check processing (step S200). The start-up check is to confirm that the secondary storage device writing control driver 111 is executed on a user terminal, the user terminal (PC) takes a measure against loss and leakage of confidential information and the file transfer client 109 is executed. Next, the file transfer client 109 accesses the file management service 113 (step S201). For example, if mutual authentication which will be described later is performed in a challenge-response way, the file transfer client 109 transmits a pre-determined value (an encryption key) of a challenge to the file management service 113 to realize the access at step S201. Then, the file management service 113 and the file transfer client 109 authenticate each other (step S202). The authentication processing is to decide whether or not the mobile phone and the user terminal are valid and take measure against loss and leakage of confidential information. For the mutual authentication, for example, the file management service 113 receives a challenge from the file transfer client 109, generates data (a response) by performing pre-determined operation processing on the challenge and sends back the response to the file transfer client 109. By comparing the response and a response generated by the file transfer client 109, the authentication is executed. On the other hand, the file management service 113 also transmits a challenge to the file transfer client 109 and similar authentication is executed. In this way, the mutual authentication is executed.

The file transfer client 109 and the file management service 113 mutually check the authentication results (step S203). If the authentication fails, each of them returns an error to an accessing party (step S206). If the authentication is successful, the file transfer client 109 transmits copy data (confidential data) to the file management service 113 (step S204), and writes the copy data received by the file management service 113 in the storing memory 116 (step S205). Such processing can allow only a valid user terminal taking a security measure to copy confidential data to the storing memory 116 of the mobile phone 102. It can also allow only the valid user terminal 101 taking a security measure to access the confidential data 115 stored in the mobile phone 102 taking a security measure.

In this embodiment, if a user unsuccessfully tries to connect the user terminal 101 to the file server 100 via the Internet 104, processing controlling means (not shown) (for example, a CPU) detects the connection failure and displays messages "cannot connect to the file server 100" and "store in the mobile phone 102 via the USB cable 105" on a display screen (not shown). In response to the messages, if the user connects the mobile phone 102 via the USB cable 105, the processing controlling means detects the connection with the mobile phone 102 and can execute processing after the above mentioned step S200.

### (3) Processing to Remotely Remove Confidential Data in Mobile Phone

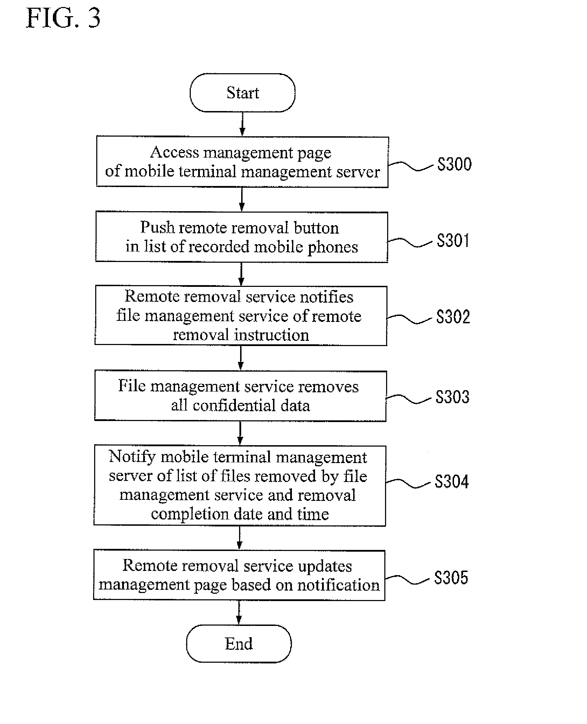

Figure 3 is a flowchart illustrating processing to remotely remove the confidential data 115 in the mobile phone 102 from the mobile terminal management server 103. The processing is, for example, to securely manage the confidential data 115 if the mobile phone 102 is lost or stolen to which the confidential data 115 has been copied from the user terminal 101.

In Fig. 3, to remove confidential data in the mobile phone 102, first of all, the system administrator operates his/her own terminal device to access the management page 117 of the mobile terminal management server 103 (step S300). Then, content of the management page 117 is displayed on a screen of the administrator's terminal. Next, the system administrator pushes a remote removal button in a list of recorded mobile phones to direct that confidential data stored in the target mobile phone 102 should be removed (step S301).

In response to the removal direction, the remote removal service 119 transmits the remote removal instruction to the file management service 113 in the mobile phone 102 through the telephone network 106 for the mobile phone (step S302). In response to the notification, the file management service 113 removes all the confidential data 115 in the storing memory 116 being built in the mobile phone 102 (step S303). Then, the mobile terminal management server 103 is notified of a list of removed files and date and time of the removal completion (step S304). Finally, the remote removal service 119 updates the management page 117 based on the remote removal completion notification (step S305).

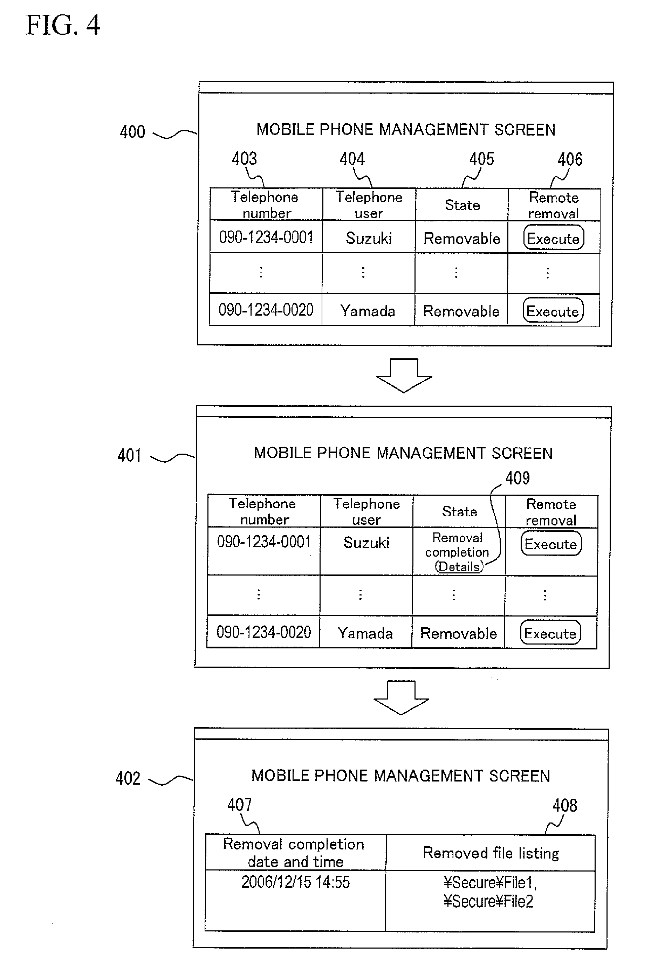

Figure 4 is a drawing representing a management page screen of the mobile terminal management server 103. A management table is on a mobile terminal management screen 400 used by the system administrator. The table consists of four sections of telephone number 403, telephone user 404, state 405 and remote removal 406. Each row corresponds to the mobile phone 102 being previously recorded. If the mobile phone 102 is lost, a remote removal instruction can be sent by pushing an execution button of the remote removal section 406. In response to a remote removal instruction, the file management service 113 in the mobile phone 102 removes corresponding files. If the removal finishes without any trouble, the file management service 113 sends remote removal management notification containing date and time of the removal completion and information of a list of removed files to the mobile terminal management server 103. In response to the notification of the remote removal completion, the mobile terminal management server 103 displays a screen 401 containing respective attributes being modified in a row corresponding to the mobile phone 102 for which the notification has been issued. "Details" 409 below "removal completion" in the state section is clicked so that removal completion specifics 402 are displayed to display removal completion date and time 407 and a listing of removed files 408. The page is to confirm that the confidential data 115 has been surely deleted from the storing memory 116 in the mobile phone 102.

As described in the above, the remote removal is basically performed through the telephone network if a mobile phone is lost. However, since a mobile phone may be lost in the outside of the service area, the removal can be also performed in combination with an option to regularly perform time deletion. As a policy of the time deletion, the deletion can be performed at a scheduled time every day, or the deletion can be performed when a certain time has elapsed after file copy, for example. This can realize further strict security.

### (4) Processing to Control Access to Confidential Data

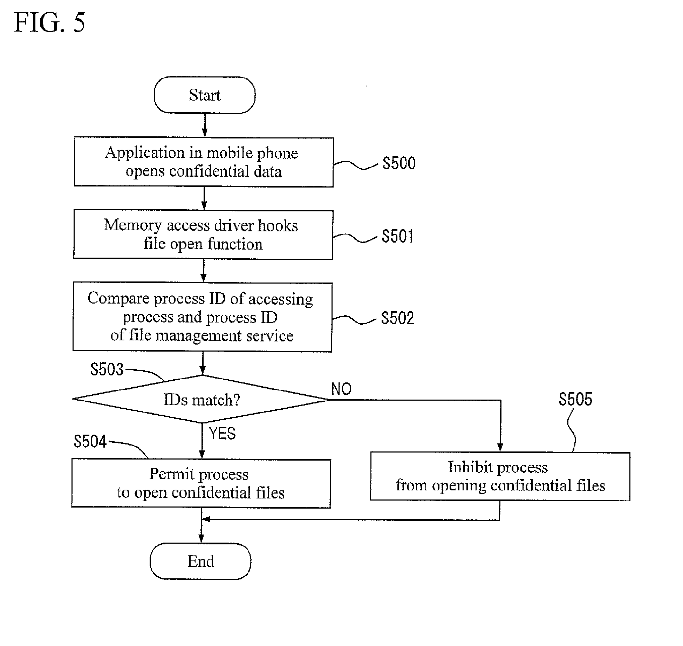

Figure 5 is a flowchart illustrating processing to control access to the confidential data 115 from the application operation unit 112 in the mobile phone 102. If the application (112 or 113) in the mobile phone 102 directs that the confidential data 115 should be opened (step S500), the memory access control driver 114 hooks a call to a file open function (step S501). Then, the memory access control driver 114 compares a process ID of the accessing (112 or 113) process and a process ID of the file management service 113 (step S502). If the IDs match each other, the memory access control driver 114 permits the process to open the confidential file (step S504). If the IDs differ from each other, the memory access control driver 114 inhibits the process from opening the confidential data 115 (step 505). This control allows only the file management service 113 to access the confidential data 115, thereby preventing a malicious user from leaking the confidential data 115 using an application such as a browser or a mailer in the mobile phone 102.

### <Second Embodiment>

### (1) Configuration of Data Management System

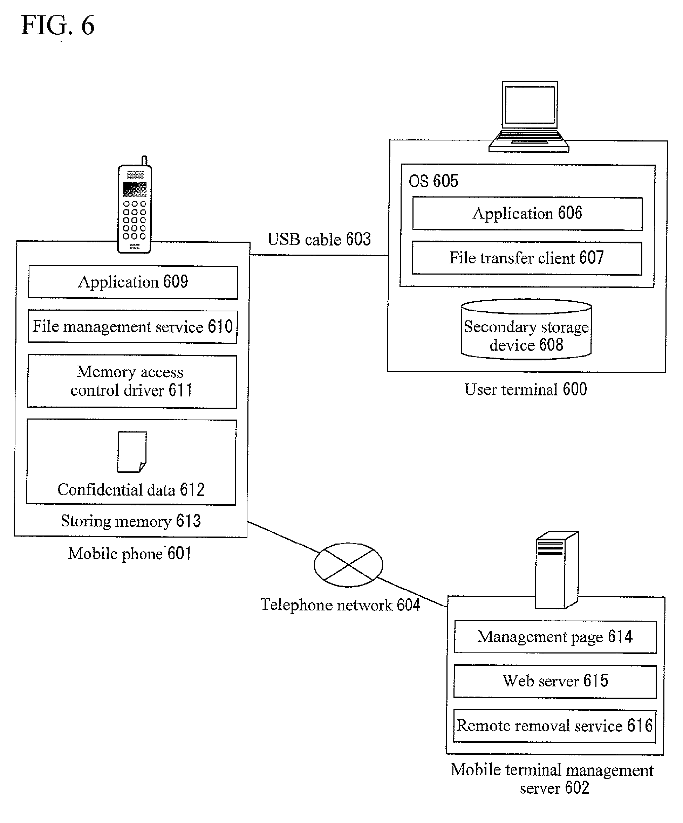

Figure 6 is a drawing showing the overall configuration of a data management system according to a second embodiment of the present invention. The second embodiment relates to an approach to management of confidential data using an existing PC. As such, this embodiment is inferior to the first embodiment in a security level but more convenient. This embodiment assumes trust in a user.

A data management system according to this embodiment differs from the first embodiment in that a user terminal 600 is an existing PC and writing into a secondary storage device 608 or writing into external storage media is not controlled.

As shown in Fig. 6, the data management system comprises the user terminal 600, a mobile phone (not limited to a mobile phone, but can be a mobile terminal such as a PDA having a communication function) 601 and a mobile terminal management server 602. The mobile phone 601 and the mobile terminal management server 602 can communicate with each other via a wireless telephone network 604.

A general application 606 and a file transfer client 607 are installed on the user terminal 600. The tools are used to access a file management service 610 in the mobile phone 601 and transfer data between the user terminal 600 and the mobile phone 601. The connection is established through a USB cable. Confidential data 612 created in the user terminal 600 can be carried around with being saved in a storing memory 613 being built in the mobile phone 601. To access the file management service 610 from the file transfer client 607, ID and password authentication is required. If the authentication is successful, the confidential data 612 in the mobile phone 601 can be accessed and the confidential data 612 can be saved in the mobile phone 601. The ID and password authentication can enable only a specific user to access and save the confidential data 612 in the mobile phone 601. In addition to the ID and password authentication, biometric authentication or device authentication such as for an IC card can be also used. The difference in authentication methods does not impair the generality of the present invention. If the mobile phone 601 is lost in which the confidential data 612 has been saved, then the administrator can access the mobile terminal management server 602 and remotely remove the confidential data 612 in the mobile phone 601 using a remote removal service 616, similarly to the first embodiment.

### (2) Processing to Control Access to Confidential Data

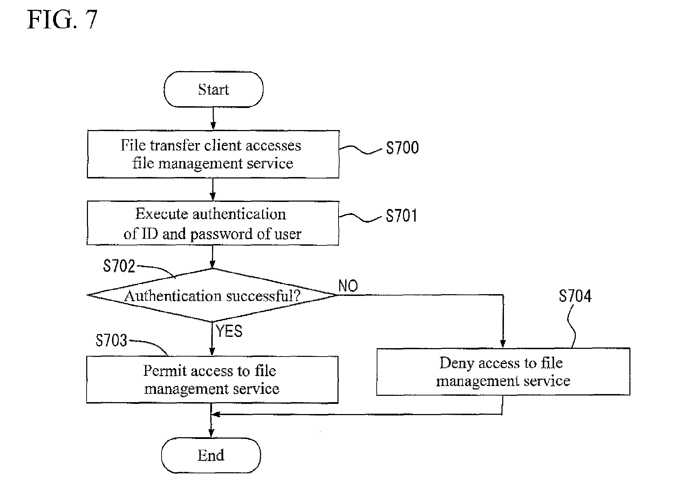

Figure 7 is a flowchart illustrating processing to access the confidential data 612 in the mobile phone 601 from the user terminal 600. First, the file transfer client 607 accesses the file management service 610 (step S700). In response to the access, the file management service 610 requests an ID and a password from a user through the file transfer client 607 (step S701). In response to the input, the file management service 610 processes authentication (step S702). If the authentication is successful, the file management service 610 permits access to itself and executes file transfer processing (step S703). If the authentication fails, the file management service 610 denies access to itself and finishes the processing (step S704).

According to the first embodiment, confidential data can be saved in or read from a mobile phone only through a specific PC. On the contrary, according to the second embodiment, confidential data can be saved in or accessed from a mobile phone through an unspecified PC if the ID and password authentication is successful. This embodiment enables a user at a customer site to save a copy of important data in a mobile phone and securely bring back the copy to his/her company, for example. Moreover, saving data in a mobile phone is performed through password authentication and reading out data is limited to a specific PC through a request of PC authentication, realizing a using method to prevent data diffusion and to copy data from an unspecified PC and securely carry around the data.

Furthermore, to realize strict security, the remote removal is basically performed through the telephone network if a mobile phone is lost. However, since a mobile phone may be lost in the outside of the service area, the removal can be also performed in combination with an option to regularly perform time deletion. As a policy of the time deletion, the deletion can be performed at a scheduled time every day, or the deletion can be performed when a certain time has elapsed after file copy, for example.

### <Conclusion>

As described in the above, according to this embodiment, confidential data is saved in a built-in memory of a mobile phone and access to the confidential data is controlled so that leakage of data is prevented. The remote removal function for the loss of the mobile phone prevents the loss of the confidential data.

More specifically, the file (data) management system according to this embodiment comprises at least a user terminal and a mobile terminal (a mobile phone). In the user terminal, a file transfer client requests access to the mobile terminal and executes transfer of a confidential file. Meanwhile, in the mobile terminal, in response to the access request by the file transfer client and others, a file management service executes authentication of the user terminal device (preferably, mutual authentication between the user terminal and the mobile terminal). If the authentication is successful, the user terminal requests access to the memory to store confidential files transferred from the file transfer client in the memory. Then, in response to the request for access to the memory, a memory access control driver permits the confidential files to be stored in the memory only if an accessing party is the file management service. If the confidential files are stored in the memory, the memory access control service identifies the accessing party that issued the request for access to the memory. If the accessing party is not the file management service, it is inhibited from accessing to the confidential files. Such configuration allows only valid apparatuses (a user terminal and a mobile terminal) to exchange confidential files (data), preventing confidential data from being carried away while being stored in a normal mobile phone. Further, such an approach enables confidential data to be securely handled even in an environment where a user terminal cannot access a file server. Furthermore, a mobile terminal can also handle confidential files only through a specific application (a file management service), thereby inhibit an application such as a mailer or word-processing software being normally installed from accessing confidential data, hence guaranteeing the confidentiality of the data.

Moreover, the file transfer client of the user terminal is used to issue a transfer request to the file management service to transfer (return) confidential files stored in the memory of the mobile terminal to the user terminal device. In response to the transfer request, the file management means can obtain confidential files from the memory and transmit them to the file transfer client. This allows for securely returning confidential data that has been brought out by the mobile terminal to the user terminal (may not be the terminal that created the confidential data) without leaking the data. This also allows for temporally storing confidential data in an environment where the file server is not available, building a very user-friendly system.

Additionally, the file management system comprises a mobile terminal server which is connected to the mobile terminal and has a remote removal control service to request to remove confidential files stored in the memory of the mobile terminal. In response to a file removal request by the remote removal control service, the file management service removes the confidential files stored in the memory and notifies the remote removal control service of the removal completion. This can prevent leakage of confidential data if the mobile terminal for storing confidential data is lost or stolen.

The user terminal includes the secondary storage device, a volatile memory for temporally storing data and a secondary storage device driver for controlling read/write of data from/to the secondary storage device. The secondary storage device control driver acquires a request for input/output of the secondary storage device by any application and stores data to be written in the volatile memory. For read data, the driver has a function for not saving the data in the secondary storage device by overwriting an overlapping part of written data stored in the volatile memory but allowing writing in a pseudo manner. This inhibits writing in the secondary storage device (for example, an HDD) so that updated confidential data never remains in the user terminal, preventing leakage of information. In an environment where the file server is accessible, updated confidential data can be stored in the file server. If the file server is not accessible, updated confidential data can be securely archived in the mobile terminal, as mentioned in the above.

The functions of the above described embodiment may also accomplished by a program code of software. In this case, storage media recording the program code is provided to the system or the devices and computers (or CPUs or MPUs) of the system or the devices read out the program code stored in the storage media. In this case, the program code itself read from the storage media realizes the functions of the embodiments described above, and hence the program code and the storage media in which the program code is stored constitute the present invention. Examples of the storage media for supplying the program code include, for example, a floppy (R) disc, a CD-ROM, a DVD-ROM, a hard disk, an optical disc, a magnetic-optical disc, a CD-R, a magnetic tape, a nonvolatile memory card, a ROM and the like.

Further, the functions of the above described embodiments may be accomplished by causing an OS (operating system) or the like which operates on the computer to perform a part or all of the actual operations based on instructions of the program code. Further, the functions of the above described embodiments may be accomplished by writing a program code read out from the storage media into a memory provided on a computer and then causing a CPU or the like provided in the computer to perform a part or all of the actual operations based on instructions of the program code.

Furthermore, a program code of software to realize the functions of the embodiments are delivered via a network so that they are stored in storage means such as a hard disk or a memory of a system or a device or storage media such as a CD-RW or a CD-R. A computer (or CPU or MPU) of the system or device can read out and execute the program code stored in the storage means or the storage media.

## Claims

1. A file management system comprising a user terminal device and a mobile terminal device and for transferring confidential files between the devices, the file management system being **characterized in that;**
said user terminal device includes:
file transfer controlling means for requesting access to said mobile terminal device and executing transfer of the confidential files, and
said mobile terminal device includes:
file management means for executing authentication of said user terminal device in response to the access request by said file transfer controlling means, and requesting access to a memory to store said confidential files transferred from said file transfer controlling means in said memory if the authentication is successful; and
memory access controlling means for, in response to the request for access to said memory, permitting said confidential files to be stored in said memory only if an accessing party is said file management means.

2. The file management system according to claim 1, further comprising a server for a mobile terminal device including remote removal controlling means being connected to said mobile terminal device and for requesting removal of said confidential files stored in the memory of said mobile terminal device, wherein:
said file management means removes said confidential files stored in said memory in response to a file removal request by said remote removal controlling means, and notifies said remote removal controlling means of removal completion.

3. The file management system according to claim 1 wherein said memory access controlling means identifies the accessing party which has issued the request for access to the memory for storing said confidential files, and inhibits access to said confidential files if the said accessing party is not said file management means.

4. The file management system according to claim 3 wherein:
said file transfer controlling means issues a transfer request to said file management means to transfer said confidential files stored in the memory of said mobile terminal device to said user terminal device; and
said file management means obtains said confidential files from said memory and transmits the files to said file transfer controlling means in response to said transfer request.

5. The file management system according to claim 1 wherein:
said user terminal device further includes:
a secondary storage device;
a volatile memory for temporally storing data; and
secondary storage device controlling means for controlling read/write of data from/into said secondary storage device, wherein:
said secondary storage device controlling means comprises a function of acquiring a request by any application for input/output of said secondary storage device, storing data to be written in said volatile memory, and not saving read data in the secondary storage device by overwriting an overlapping part of the written data stored in said volatile memory, but allowing pseudo writing; and
created files are archived in said mobile terminal device if communication is not available when said user terminal device saves the files.

6. A mobile terminal device for transmitting/receiving confidential files to/from a user terminal device, the mobile terminal device, comprising:
file management means for executing authentication of said user terminal device in response to an access request by said user terminal device, and requesting access to a memory to store said confidential files transferred from said user terminal device in said memory if the authentication is successful; and
memory access controlling means for, in response to the request for access to said memory, permitting said confidential files to be stored in said memory only if an accessing party is said file management means.

7. The mobile terminal device according to claim 6 wherein said file management means receives the request to remove said confidential files stored in said memory from a server for a mobile terminal device, removes said confidential files stored in said memory in response to said file removal request, and notifies said server for a mobile terminal device of the removal completion.

8. The mobile terminal device according to claim 6, wherein said memory access controlling means identifies the accessing party which has issued the request for access to the memory for storing said confidential files, and inhibits access to said confidential files if the said accessing party is not said file management means.

9. The mobile terminal device according to claim 8 wherein said file management means receives a transfer request to direct that said confidential files stored in said memory should be transferred to said user terminal device from said user terminal device, obtains said confidential files from said memory in response to said transfer request, and transmits the files to said user terminal device.

10. A file management method of managing transfer of confidential files in a system including a user terminal device and a mobile terminal device, wherein:
in said user terminal device:
file transfer controlling means requests access to said mobile terminal device, and
in said mobile terminal device:
file management means executes authentication of said user terminal device in response to the access request by said file transfer controlling means, and requests for access to said memory to store said confidential files transferred from said file transfer controlling means in a memory if the authentication is successful; and
memory access controlling means permits, in response to the request for access to said memory, said confidential files to be stored in said memory only if an accessing party is said file management means.

11. The file management method according to claim 10 wherein said system further comprises a server for a mobile terminal device including remote removal controlling means being connected to said mobile terminal device and for requesting removal of said confidential files stored in the memory of said mobile terminal device, wherein:
said file management means removes said confidential files stored in said memory in response to a file removal request by said remote removal controlling means, and notifies said remote removal controlling means of removal completion.

12. The file management method according to claim 10 wherein said memory access controlling means identifies the accessing party which has issued the request for access to the memory for storing said confidential files, and inhibits access to said confidential files if the said accessing party is not said file management means.

13. The file management method according to claim 12 wherein:
said file transfer controlling means issues a transfer request to said file management means to transfer said confidential files stored in the memory of said mobile terminal device to said user terminal device; and
said file management means obtains said confidential files from said memory and transmits the files to said file transfer controlling means in response to said transfer request.

14. The file management method according to claim 10 wherein:
said user terminal device further includes:
a secondary storage device;
a volatile memory for temporally storing data; and
secondary storage device controlling means for controlling read/write of data from/into said secondary storage device, wherein:
said secondary storage device controlling means acquires a request by any application for input/output of said secondary storage device, stores data to be written in said volatile memory, and does not save read data in the secondary storage device by overwriting an overlapping part of the written data stored in said volatile memory, but allows pseudo writing; and
created files are archived in said mobile terminal device in an environment where communication is not available when said user terminal device saves the files.
